# EUROPÄISCHE PATENTANMELDUNG

(11) **EP 2 455 867 A1**
(43) Veröffentlichungstag der Anmeldung: **23.05.2012**
(21) Anmeldenummer: 10191542.9
(22) Anmeldetag: 17.11.2010
(51) Int. Cl.: G06F 17/21

(54) **Verfahren zur digitalen Signatur und zum Hoch- und Herunterladen von Schriften**

(71) Anmelder: TechConsult International Ltd., Co. Dublin (IE)
(72) Erfinder: Schmitz, Jürgen, 50935, Köln (DE); Albert, Klaus, 50767, Köln (DE); Sean, Mc Laughlin, Co. Dublin, Naul (IE)
(74) Vertreter: Bungartz, Klaus Peter

(57) **Zusammenfassung**

Die Erfindung betrifft ein Verfahren und ein Softwaremodul zum Anzeigen oder Ausdrucken von Schriften mit identischer Darstellung der Schriften. Ferner betrifft die Erfindung ein System zum Verwalten von Schriften.
Schriften werden in elektronischen Dokumenten anhand von Schriftnamen identifiziert. Dies führt aber zu nicht genau reproduzierbaren Ergebnissen, da trotz identischer Namen die dahinter liegenden Schriften nicht exakt identisch sein müssen. Zur Lösung dieses Problems schlägt die Erfindung vor, die Schriften zu signieren und bei fehlenden Schriften über automatisierte Datenbankabfragen die benötigten Schriften mit der verwendeten Signatur aus einer lokalen Quelle oder über einen Schriftserver einzulesen. Bei Erstellung von neuen Dokumenten erfolgt eine Sicherung der signierten Schriften lokal oder auf einem externen Schriftserver.
Sollte wider Erwarten und gegen bestehende Rechtsprechung an Schriften bei der Weitergabe eines Dokumentes mit einer Schrift eine Lizenzproblematik entstehen, ist es möglich, über eine Rechteverwaltung die Lizenzproblematik zu klären. In allen Fällen, in denen Lizenzgebühren verlangt werden können, kann ein Dialog geöffnet werden, der in den Datenverkehr von uploadenden und downloadenden Rechnern zwischengeschaltet ist.

## Beschreibung

Die Erfindung betrifft ein Verfahren zur Erstellung, Bearbeitung und Ausgabe von elektronischen Dokumenten, die auf einem Rechner erstellt und bearbeitet werden und über diesen oder einen anderen Rechner bearbeitet oder zur elektronischen Ausgabe oder zum Ausdruck aufbereitet werden. Das Verfahren umfasst die Schritte:
- Öffnen, Erstellen, Bearbeiten oder Einlesen eines elektronischen Dokumentes, das Text ent-hält. Der Text in der Datei ist durch die namentliche Angabe von Schriften formatiert.
- Umwandeln des elektronischen Dokumentes in eine elektronische Ausgabedatei.
- Ausgeben der Ausgabedatei auf einem Bildschirm oder über einen Druckvor-gang in einem Printmedium.
- Umwandlung des Dokumentes in ein unabhängiges Displayformat (PDF).

Dabei verwendete Schriften werden durch Angabe der Schriftnamen im Dokument, das den formatierten Text enthält, gespei-chert. Die genutzten Schriften werden beim Bearbeiten oder Umwandeln des Dokumentes in eine druckbare Ausgabedatei über die Schriftnamen aus den lokal abgespeicherten Schriften ausgewählt und erneut verwendet.

Insbesondere betrifft die Erfindung die Darstellung von Schriften in jedem beliebigen Dokument (Werbemedien, Präsentation, Bürodokumente und Korrespondenz oder bei sonstigen gedruckten Werken und Displayformaten [PDF]), bei denen ein elektronisches Dokument mit zumindest einer Textpassage erstellt wird. Die Textpassage ist durch wenigstens eine Zeichenfolge (Buchstaben, Zahlen oder Sonderzeichen) und wenigstens eine Schrift unter Angabe des Schriftnamens vollständig oder teilweise in der Erscheinungsweise festgelegt. Das elektronische Dokument kann anschließend bearbeitet oder durch Aufbereiten zumin-dest der Textpassage zum Ausdrucken in eine druckbare Ausgabedatei (Druckvorlage) umgewandelt und/oder zum Ausdrucken direkt an einen Drucker übertragen werden und/oder zu einem unabhängigen Displayformat (PDF) und/oder zu einer Pixeldatei gewandelt werden.

### Stand der Technik

Die Marketingindustrie, die Bürokommunikation und auch die Privatkommunikation nutzen für ihre Dokumente eine Vielzahl unterschiedlicher Schriften. Zigtausend unterschiedliche Schriften und davon Schriftschnitte mehr oder weniger unterschiedlich im Design gibt es in der Welt.

Unter einer Schrift versteht man u.a. die Darstellung aller Buchstaben, Zeichen, Sonderzeichen und Zahlen in einem eigenen Design, für zum Teil unterschiedliche Sprachen.

Als Schriftschnitt wird die Ausprägung desselben Schriftdesigns in unterschiedlichen Stärken (light, mager, normal, halbfett, fett) oder einer anderen Variante (schmal, kursiv) eines gleichen Designs verstanden. Hinzu kommt eine unendliche Vielzahl von Varianten und eigener Adaptionen der von professionellen Schriftdesignern erstellten Ausgangsschriften. Diese Adaptionen unterscheiden sich vom Original oft nur in kleinsten Designs und Veränderungen der Laufweite.

Unter Laufweite versteht man die Zuordnung der einzelnen Buchstaben zueinander, die bei den meisten Schriften in der Breite variieren. Zusätzlich können in Schriften noch individuelle Zuordnungen von einzelnen Buchstabenkombinationen eingefügt worden sein. Die Laufweite einer Schrift bestimmt, wie viele Buchstaben jeweils in eine Zeile passen.

Mal abgesehen von Schriften, die individuell für einen Kunden designt wurden, ist eine Schrift mit gleichem Namen nicht auch immer dieselbe Schrift. Viele Standardschriften wie Helvetica, Times, Arial werden heute von unterschiedlichen Lieferanten, insbesondere mit unterschiedlichen Laufweiten, verkauft. Gleicher Name, gleiches und/oder ähnliches Aussehen (Schriftdesign) und doch nicht dieselbe Schrift. Der Anwender kann mit einfachen Mitteln einen Unterschied oft nicht feststellen.

Es ist unmöglich, alle Schriften und deren Varianten auf einem Rechner vorzuhalten.

In den Betriebssystemen Mac OS und Windows werden standardmäßig Schriften in Schriftordner und Unterordner gespeichert, die vom Betriebssystem vorgegeben werden. Die Schriften werden dabei einzig über Ihren Schriftnamen und den Schriftordner und/oder Unterordner identifiziert. Regelmäßig sind Standardschriften wie Helvetica, Arial, Times etc. gleich mehrfach auf einem Rechner in unterschiedlichen Orderstrukturen vorhanden.

Besonderheit Mac OS:

Bei Mac OS kann die Vielzahl der Schriften über ein systemeigenes oder im Markt verfügbares Verwaltungsprogramm verwaltet werden. Gegebenenfalls namentlich doppelte Schriften werden angezeigt. Aus der Vielfalt der vorhandenen Schriften können über solche Verwaltungsprogramme zur Entlastung des Betriebssystems und zur besseren Orientierung Schriften für die Nutzung in Programmen aktiviert und deaktiviert werden. Es darf dabei immer nur eine Schrift gleichen Namens aktiviert sein. Die anderen Schriften mit gleichem Namen müssen für eine eindeutige Nutzung deaktiviert sein. Es kann mit einfachen Mitteln auch hier nicht erkannt werden, inwieweit Schriften gleichen Namens in Design und Laufweite unterschiedlich sind.

Jeder, der mit einer oder mehreren Schriften erstellte Dokumente bearbeiten und/oder ausdrucken will, insbesondere die Marketingindustrie, befindet sich trotz aller am Markt erhältlichen Schrift-Verwaltungsprogramme nach wie vor in einem Schriftendilemma. Oft sind Schriften nicht auf allen Rechnern eines Unternehmens und/oder Ateliers gleich installiert. Ebenso befindet sich auf den lokalen Rechnern oft eine Vielfalt gleichnamiger Schriften in unterschiedlichen Varianten. Eine eindeutige Identifikation von Schriften ist daher über den Schriftnamen alleine nicht möglich, zumal die Schriften ohne Namensänderung oft, wenn auch meist nur geringfü-gig, modifiziert sein können.

Über Datenserver, Datenträgeraustausch, USB-Sticks, Email und Up- und Downloads werden Dokumente in Firmen und im Privaten national und international zur Weiterbearbeitung und/oder zum Ausdrucken ausgetauscht. Den Empfänger stellen diese immer wieder vor große Schriftenprobleme. Er hat entweder die im Dokument verwendeten Schriften nicht auf seinem Rechner oder er verfügt nicht über die exakten Schriftversi-onen. Er kann das Dokument dann auf seinem Rechner nur mit Austauschschriften bearbeiten und/oder ausdrucken. Dies führt neben der feh-lenden Eindeutigkeit des Layouts zu nicht vorgesehenen Zeilenumbrüchen aufgrund verschiedener Laufweiten zweier gleichnamiger, aber im Detail doch unter-schiedlicher Schriften. Es kann ferner zu unerwünschten Veränderungen des Textflusses kommen und/oder ganze Textpassagen werden nicht angezeigt.

Die Ursache liegt in den gängigen Layout-, Textverarbeitungs-, Kalkulations- und Präsentationsprogrammen. Diese Programme speichern nur die Schriftnamen, die im Dokument verwendet werden. Die Schriften selbst werden dabei nicht im Dokument gespeichert, sondern sind nur lokal auf dem jeweiligen Rechner installiert. Die Identifikation der Schrift erfolgt dann anhand des Namens. Sofern die Schrift nicht vorhanden ist, wird entweder beim Bearbeiten und Ausdrucken eine ähnliche Ersatzschrift herangezogen oder eine der Grundschriften (z. B. Courier oder Arial) verwendet.

Auch wenn der Anwender üblicherweise gewarnt wird, wenn die in dem, möglicher-weise auf einem entfernten Rechner, erstellten Dokument verwendete Schrift nicht vor-handen ist, bestehen bei dem bekannten Verfahren zwei generelle Probleme:

Falls die Schrift nicht vorhanden ist, bewahrt die genannte Warnung den Anwender mög-licherweise vor einem falschen Ausdruck. Das Problem jedoch besteht weiterhin. Das gewünschte Layout/Design ist ohne Schrift nicht erzeugbar.

Auch keine befriedigende Lösung stellt dar, wenn Schriften auf dem Rechner für die Bearbeitung oder den Druck und auf dem Quellrechner vorhanden sind. Es besagt lediglich, dass beide Rechner über Schriften mit glei-chem Namen verfügen. Ob exakt dieselben Schriften vorliegen, ist damit nicht garantiert.

In diesem Falle erhält der Anwender auch keine Warnung. Die aktivierten Schriften mit denselben Namen werden einfach im Dokument mit all seinen Änderungen und Folgen verwendet.

In allen Berei-chen, wo individuelle Dokumente ausgetauscht werden, insbesondere im professionellen Agenturbereich, ist das Problem erheblich, da individuelle Schriften auch exakt dargestellt werden sollten bzw. müssen.

Der zentrale Nachteil des beschriebenen Vorgangs besteht also insbesondere darin, dass eine Schrift, auf die die Referenzangaben in den vor-liegenden elektronischen Dokumenten hinweisen, neben den üblichen Formatierungsanga-ben zu deren Identifikation nur ihren Schriftnamen enthält. Die Schrift muss auf einem beliebigen Zielrechner, der die weitere Ver- und Bearbeitung oder Ausdruck übernimmt, nicht vorliegen. Auch kann eine leicht modifizierte Schrift auf dem Zielrechner installiert sein, was zu Verfälschungen führt.

Aufgabe der Erfindung ist es somit, ein Verfahren zu schaffen, bei dem sowohl auf einem einzelnen Rechner als auch innerhalb eines Netz-werks oder bei einer Onlinezusammenarbeit sicher gestellt ist, dass die Darstellung von Textelementen immer eindeutig reproduzierbar ist. Eine weitere Aufgabe besteht darin, die in einem Dokument verwendeten Schriften eindeutig zu identifizieren und exakt diese Schriften zur Dokumentbearbeitung zur Verfügung zu stellen.

### Kurzbeschreibung der Erfindung

Erfindungsgemäß wird diese Aufgabe dadurch gelöst, dass zur reproduzierbaren Wieder-gabe und/oder Bearbeitung und/oder Ausgabe von Schriften in den Dokumenten zu jeder Schrift eine eindeutige, elektronische Signatur erstellt und in dem Dokument eingebettet wird. Bei dem Vorgang werden der Schriftname, der lokale Ablageort (Ordner und Unterordner) und die Signatur in eine lokale Schriftliste eingetragen und gleichzeitig wird die Schrift inkl. Signatur auf einem lokalen und/oder externen Schriftserver zusätzlich gespeichert.

Die Erfindung verbindet nun Dokumente eindeutig mit den jeweils darin verwendeten Schriften.

Bei Bearbeitung und/oder Ausdruck des Dokumentes wird die Signatur der im elektronischen Doku-ment verwendeten Schrift mit den Signaturen der lokal verfügbaren Schriften auf dem Rechner verglichen, mit dem das Bearbeiten und/oder Ausdrucken durchgeführt wird.

Bei mangelnder Übereinstim-mung der Signaturen oder bei Fehlen einer signierten Schrift mit einer übereinstimmenden Signatur wird selbst-tätig eine Routine ausgelöst, die folgende Optionen enthält:
- Aktivieren der vorhandenen Schrift mit gleicher Signatur auf dem lokalen Rechner,
- Schrift laden von einem lokalen oder externen Schriftserver,
- Aktivieren derselben Schriften,
- Anzeige einer Fehlermeldung,
- Deaktivieren von konkurrierender Schrift.

Durch die Signatur der Schriften wird nun zusätzlich zu deren Dateinamen eine eindeutige Information über die Identität und die Herkunft der Schriften übermit-telt. Unter Signatur ist in diesem Sinne zunächst jede Markierung zu verstehen, die eine Identität der Schrift sicherstellt, insbesondere eine elektronische oder digitale Signatur. Beispiel hierfür sind Signaturen, die einen privaten und einen öffentlichen Schlüssel aufweisen, also die üblichen bekannten Signaturverfahren, die etwa unter Ver-wendung eines "D5 Hash-Codes" oder mittels einer SHA-1-Hash-Funktion den Inhalt der Datei verschlüsseln und indizieren.

Durch die Signierung der Schriften ist unabhängig von dem Dateinamen jede Schrift eindeutig erkennbar. Nur bei eindeuti-ger Zugehörigkeit kann eine Bearbeitung und Aufbereitung des Dokumentes erfolgen. So kann unabhängig vom Namen der Schriften jede Änderung erkannt und entsprechend reagiert werden: Entweder das Dokument wird unter ausdrücklichem Hinweis auf die Fehlerhaftig-keit zum Ausdruck oder zur weiteren Produktion angeboten. Auch kann eine Routine zur Fehlerbehandlung durchgeführt werden, die zum Beispiel die Beschaffung der erforderli-chen Schriften durch das System selbst oder durch den Benutzer manuell oder automatisch von einem lokalen oder externen Schriftserver umfassen kann.

Auf diese Weise wird es nun möglich, nur die modifizierte Schrift, nicht jedoch eine andere modifi-zierte Schrift oder die ursprüngliche Schrift selbst zu verwenden. Dafür wird die Signatur von demjenigen Programmelement abgefragt und mit der Originalsignatur verglichen, das die Bearbeitung und/oder den Ausdruck oder die weitere Produktion umsetzt. Die Originalsignatur ist hinterlegt im Dokument, das bearbeitet und/oder ausgedruckt werden soll.

Die erfindungsgemäße Ausgestaltung des Verfahrens beruht grundsätzlich auf der Signa-tur der Schriften und der Speicherung der Schriftsignatur im jeweiligen Dokument. Über eine solche Signatur kann die Eindeutigkeit einer Schrift zu jedem Zeitpunkt nachgeprüft werden. Jede Form von Änderungen wird bei Vergleich der Signatur mit der Originaldatei sofort offensichtlich.

Das Signieren der Schriften ist allerdings nur ein Gesichtspunkt der vorliegenden Erfindung, der im einfachsten Fall schon zu einem gewünschten Ergebnis führen kann. In der Regel führt dies aber nicht über die Feststellung hinaus, dass die im Dokument verwendeten Schriften nicht mit den auf dem Rechner installierten Schriften übereinstimmen. Deshalb ist eine Routine zur Schriften-kontrolle vorgesehen, die die unterschiedlichsten Ausgestaltungen ha-ben kann.

Im einfachsten Fall besteht die Routine aus einem ganz normalen Benutzerdialog. Er zeigt dem Benutzer an, dass ein Schriftenproblem vorliegt und dass der Benutzer dafür Sorge tra-gen muss, die verwendeten Schriften auf dem Rechner zu installieren. Dieser ein-fachste Fall trägt grundsätzlich zur Problemlösung bei, stellt aber noch keine optimale Lösung dar.

Aus dem oben genannten Grund wird daher die Routine zur Schriftenkontrolle aufwendi-ger ausgestaltet werden. Bevorzugt wird hiermit das Ziel erreicht, dass die in einem Dokument verwendeten Schriften automatisch aktiviert und/oder vorab von einem Schriftserver installiert werden können. Dadurch muss der Benutzer wenig Aufwand betreiben, um das originalgetreue Schriftstück bearbeiten und ausdrucken zu können.

Zum einen wird dem Benutzer eine wesentliche Arbeit abgenommen, bzw. er erkennt überhaupt, dass hier ein Schriftproblem vorliegt. Hiermit nimmt die Wahrscheinlichkeit ab, dass er an der Aufgabe zur Installation der benötigten Schriften scheitert.

Zum anderen kann Zeit gespart werden und die Neigung des Benutzers, das System zu überlisten und doch einen Text mit einer falschen Schrift zu bearbeiten und/oder auszudrucken, minimiert werden.

Im Nachfolgenden wird die Erfindung anhand des Bearbeitens und Ausdruckens einer Datei beschrieben, wobei es hier grundsätzlich um die Darstellung von Schriften geht. Selbstverständlich kann diese Darstellung auch in anderen Medien, insbesondere auf Bildschirmen oder Pro-jektoren erfolgen, sodass beispielsweise die zu einer bestimmten Corporate Identity (CI) gehörende Schrift auch in solchen Präsentationsmedien dargestellt werden kann. Der Begriff "Drucken" umfasst nicht nur das Drucken in Werbeprospekten oder in sonstigen Druckereierzeugnissen. Er umfasst auch das Ausdrucken auf jedweden großen und kleinen, ein- und mehrfarbigen Digitaldrucksystemen, Bürodruckern und ähnlichen An-wendungen und/oder die Ausgabe des Dokumentes zu einem PDF.

Hat beispielsweise ein Layouter ein Dokument unter Verwendung eines Derivates der Schrift Helvetica erzeugt, wird diese Schrift - wie oben dargestellt - mittels einer Signatur markiert und diese Signatur über eine entsprechende Programmerweiterung des Gestaltungsprogramms oder später über ein Softwaretool dem Dokument an geeigneter Stelle hinzugefügt. Alle weiteren im Dokument verwendeten und unsignierten Schriften erhalten eine entsprechende Signatur. Dieses Verfahren unterscheidet sich hinsichtlich der Signatur nicht von den üblichen Au-thentizitätsprüfungen anderer signierter elektronischer Dokumente.

Alternativ können auch alle anderen Arten der Authentizitätsprüfung vorgesehen sein, die nach der Erfindung mit dem Begriff "Signatur" ebenfalls gemeint sind. Wichtig ist nur eine softwareseitige Prüfung der Identität der Schriften über den Signaturver-gleich auf dem Zielrechner, der die Bearbeitung oder den Ausdruck über-nimmt, und dem Quellrechner, auf dem das zu bearbeitende und/oder auszudruckende Dokument erstellt wurde.

Wird nun ein Dokument auf einem Rechner geöffnet, das eine signierte Schrift enthält, muss erfindungsgemäß über eine auf diesem Rechner installierte Softwarekomponente verglichen werden, ob exakt die verwendete und signierte Schrift in der Schriftbibliothek, auf die zugegriffen wird, zur Verfügung steht. Ist eine entsprechend signierte Schrift vor-handen, wird diese aktiviert und zur Darstellung des Textelementes verwendet.

Eine gegebenenfalls vom Namen her konkurrierende aktive Schrift wird vorab deaktiviert. Ist die Schrift da-gegen nicht vorhanden, kann nach dem erweiterten Verfahren zunächst auf einem Schriftserver gesucht werden, ob die Schrift verfügbar ist.

Ein solcher Schriftserver kann zum Beispiel auf einem lokalen oder externen Server, einem Server innerhalb eines LAN (Local Area Network), WAN (Wide Area Network) oder auch über das Internet verfügbar sein. Findet die Software dann auf diese Weise die dazugehö-rige Schrift mit der entsprechenden Signatur, wird diese unmittelbar auf den lokalen Rechner kopiert, installiert und - ggf. nach der Deaktivierung einer konkurrierenden Schrift - aktiviert. Sollte es bei zukünftigen Layout- und Textprogrammen möglich sein, Schriften im Dokument direkt zu integrieren, wird diese Schrift dann auch gleich im Dokument integriert.

Die zweite Kernaufgabe der Erfindung besteht darin, die ver-wendeten, signierten Schriften dem Anmelder zur Verfügung zu stellen. Nachdem das Programm oder die Programmerweiterung festgestellt hat, dass in dem aufzubereitenden bzw. aus-zudruckenden Dokument eine signierte Schrift verwendet wurde und dass auf dem lo-kalen Rechner, der die Aufbereitung zur Druckvorlage bewirken soll, eine solche signierte Schrift nicht vorhanden ist, kann entweder automatisch oder über den Ablauf eines Dialogs mit dem Benutzer dafür Sorge getragen werden, dass die Schrift mit entsprechender Signatur von einem Schriftserver zur Verfügung gestellt wird.

Die notwendigen, signierten Schriften können zur Verfügung gestellt werden, indem sie über das Betriebssystem als Systemschrift installiert werden. Für die Installation werden die bekannten Funktionen von Windows- oder MAC OS-Rechnern genutzt.

Der Vorgang kann automatisch geschehen, wenn eine Schrift benötigt und gefunden wird. Hierzu kann die Programmerweiterung oder ein sonstiges, auf dem jeweiligen Rechner installiertes Programm selbsttätig einen zuvor bestimmten und durch hinterlegte Parameter adressierbaren Schriftserver kontaktieren und dort nach der benötigten Schrift mit entsprechender Signatur suchen. Sofern diese Schrift auf dem Schriftserver gefunden wird, kann automa-tisch der entsprechende Installations- und Aktivierungsprozess gestartet werden.

-Sollte wider Erwarten und gegen bestehende Rechtsprechung an Schriften bei der Weitergabe eines Dokumentes mit einer Schrift eine Lizenzproblematik entstehen, ist es möglich, über eine Rechteverwaltung die Lizenzproblematik zu klären. Grundsätzlich sind nach bestehender Rechtsprechung Schriften frei verfügbar, insbesondere aber wenn der entspre-chende Urheber keine Lizenzgebühren verlangt, oder wenn der Schriftenschutz zwi-schenzeitig ausgelaufen ist. Darüber hinaus kann der Benutzer eines Systems auch be-rechtigt sein, eine Schrift frei zu verwenden. Dieser Fall tritt ein, wenn die Schrift speziell für einen Kunden entwickelt wurde und er die Designkosten einmalig abgegolten hat.

Eine letzte Möglichkeit ist natürlich, dass der Benut-zer die Schrift nicht kostenlos verwenden darf. Demnach ist die Verwendung von der Zahlung einer Lizenzgebühr abhängig.

In allen Fällen, in denen Lizenzgebühren verlangt werden können, kann ein Dialog geöffnet werden, der in den Datenverkehr von uploadenden und downloadenden Rechnern zwischengeschaltet ist. Dieser Dialog kann zunächst prüfen, ob eine Berechti-gung zur Verwendung der Schrift auf dem nachfragenden Rechner vorhanden ist. Der Dialog kann dabei sowohl von einem Programm auf dem nachfragenden Rechner als auch von einem externen Programm geführt werden. Bei Letzterem ist das Programm entweder auf dem Rechner installiert, der die Datenbank vorhält oder auf einem anderen Rechner vorhanden.

Damit ein System nicht dauerhaft mit einer Schrift belastet wird, kann nach Abschluss der Bearbeitung, etwa nach Umwandlung des Dokumentes in ein Druck-PDF oder eine Pixeldatei, die heruntergeladene Schrift wieder gelöscht werden. Auch hier kann ein Dialog vorgesehen sein, der dem Benutzer eine manuelle Eingriffsmöglichkeit bietet. Der Benutzer kann beispielsweise das Löschen der Schrift nicht wünschen, weil ein entsprechendes Dokument vermutlich zukünftig häufiger bearbeitet wird.

### Kurze Beschreibung der Zeichnungsfiguren

Figur 1: Das Verfahren zum automatischen Schriftenhandling beim Speichern eines Dokumentes

Figur 2: Das Verfahren zum automatischen Schriftenhandling beim Öffnen eines Do-kumentes.

### Beschreibung der Ausführungsarten

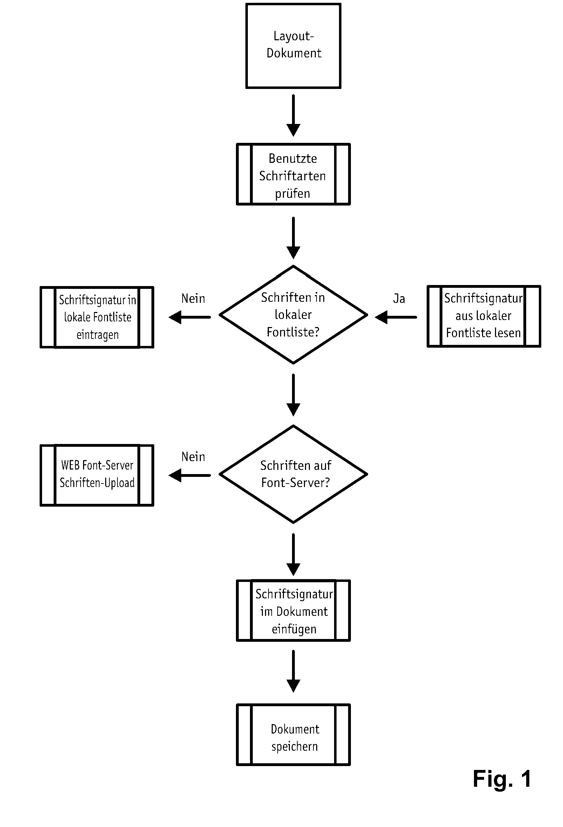

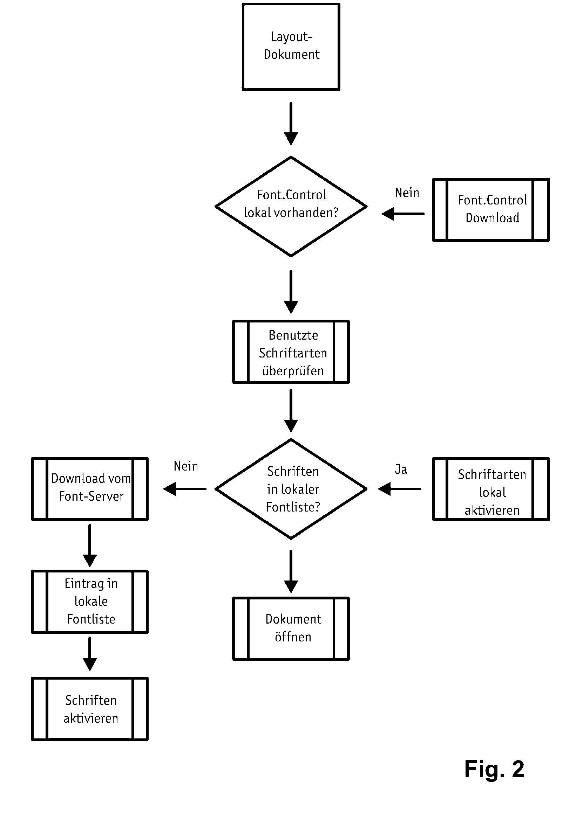

Das in Figur 1 und Figur 2 dargestellte Flussdiagramm zeigt nochmals die wesentlichen Verfahrensschritte eines besonders bevorzugten Ausführungsbeispiels der Erfindung. Die Erfindung kann teilweise oder als Ganzes in einem automatischen, semiautomatischen und/oder manuellen Prozess genutzt werden.
1. Signatur jeder Schrift und Eintrag in eine lokale Schriftliste.
2. Speicherung von Signatur und Schrift auf einem lokalen oder externen Schriftserver. So stehen die Schriften auch über den lokalen Rechner hinaus zur Verfügung.
3. Integration der Schriftsignatur zusätzlich zum Schriftnamen bei der Erstellung und Speicherung von Dokumenten.
4. Schrift laden von einem Schriftserver und Schriftdatenbank.
5. Deaktivierung und Aktivierung von konkurrierenden Schriften auf dem lokalen Rechner.

Grundsätzlich kann ein Dokument vier Prozessen unterworfen werden, bei denen die Erfindung ganz oder teilweise zum Einsatz kommt.
1. Erstellung eines neuen Dokumentes.
2. Veränderung und Bearbeitung eines bestehenden Dokumentes.
3. Ausdrucken oder Visualisierung eines Dokumentes zur Präsentation (PDF).
4. Archivierung der Dokumente.

Figur 1 zeigt das Verfahren nach der Erfindung entsprechend einer vollautomatischen Schriftkontrolle. Der dargestellte Verfahrensabschnitt wird zum Erstellen eines neuen Dokumentes verwendet.

Der Benutzer erstellt auf einem lokalen Rechner ein Dokument, in dem er von den auf seinem Rechner aktivierten Schriften beliebige Schriften verwendet.

Beim Speichern des Dokumentes wird erfindungsgemäß das Dokument auf die tatsächlich verwendeten Schriften hin untersucht. Jede gefundene Schrift, die zu diesem Zeitpunkt noch eindeutig, weil aktiviert, über den Namen und Schriftpfad identifizierbar ist, wird mit der lokalen Schriftliste abgeglichen. Dabei wird geprüft, ob es zu dieser Schrift schon eine Signatur gibt. Wenn ja, wird die in der Schriftliste gefundene Signatur ins Dokument zum Schriftnamen eingetragen. Wenn eine im Dokument verwendete Schrift noch nicht in der Schriftliste steht, wird zu dieser Schrift eine Signatur erzeugt. Schrift, Signatur und Schriftpfad werden in die lokale Schriftliste eingetragen und anschließend die Signatur ins Dokument eingetragen. So wird mit allen im Dokument gefundenen Schriften verfahren. Nachfolgend wird im Dokument ein sichtbarer Vermerk hinterlassen, dass dieses Dokument neben den Schriftnamen auch eine entsprechende Schriftsignatur enthält. Damit ist die Speicherung des Dokumentes beendet.

Unabhängig und/oder gleichzeitig wird in einem parallelen Prozess überprüft, ob die im Dokument verwendeten Schriften schon auf dem lokalen oder externen Schriftserver sich befinden. Schriften, die noch nicht auf dem Schriftserver vorhanden sind, werden dort auch gespeichert. Dieser parallele Prozess kann ggf. auch zeitversetzt geschehen, wenn der Zugriff auf den lokalen oder externen Schriftserver aktuell nicht gewährleistet ist. Für die zeitversetzte Speicherung werden die Schriften, die sich noch nicht auf einem Schriftserver befinden, entsprechend in der lokalen Schriftliste gekennzeichnet.

Das so erzeugte Dokument kann dann auf demselben Rechner oder - über ein lokales oder ein überregionales Netzwerk zur Verfügung gestellt - von einem beliebigen Benutzer auf dessen Rechner bearbeitet oder ausgedruckt werden.

Figur 2 zeigt das Bearbeiten und/oder Ausdrucken eines Dokumentes auf einem anderen Rechner. Das Dokument enthält wie unter Figur1 beschrieben signierte Schriften. Es befindet sich entweder im lokalen Netzwerk oder auf einem Rechner, auf dem das Dokument als offene Datei übertragen wurde.

Zunächst muss überprüft werden, ob auf dem Rechner die technischen Möglichkeiten vorhanden sind, die Rou-tine zur Schriftenkontrolle zu starten.

Um diese Kontrolle auszuführen, wurde wie unter Figur 1 beschrieben auch ein Vermerk im Dokument eingefügt. Der Vermerk weist den aktuellen Anwender darauf hin, dass ggf. in dem Dokument Schriften verwendet wurden, die auf seinem Rechner nicht vorhanden sind. Diese Meldung enthält auch einen Hinweis, wie die entsprechenden Schriftkontroll-Funktionen aus dem Web heruntergeladen und installiert werden können.

Diese Meldung wird nicht angezeigt, wenn auf dem Rechner schon die Schriftkontroll-Routine installiert wurde.

Es kann auch ein Stück ausführbares Programm im Dokument integriert werden, dass dann die Installationsroutine für die Schriftkontroll-Routine automatisiert.

Die Schriftkontroll-Routinen müssen auf dem betreffenden Rechner installiert sein, damit die folgend beschriebenen Prozessschritte abgearbeitet werden können.

Das so übermittelte Softwaremodul muss nicht zwangsläufig die Routine zur Schriftenkontrolle enthalten. Vielmehr kann es sich hierbei nur um ein Kontrollprogramm handeln, das überprüft, ob das benötigte Softwaremodul auf dem Rechner des Benutzers bereits vorhanden ist. Ist dies nicht der Fall, kann dieses Modul dann von einer hinterlegten Ad-resse heruntergeladen werden und auf dem Rechner des Benutzers installiert werden. Ist abschließend die Software mit der Routine zur Schriftenkontrolle auf dem Rechner des Benutzers vorhanden, wird das Dokument geöffnet.

Beim Öffnen des Dokumentes wird anhand der integrierten Schrift-Signaturen zunächst überprüft, ob die verwendeten Schriften in der lokalen Schriftliste des öffnenden Rechners vorhanden sind. Sind Schriften lokal vorhanden, werden diese für das Dokument aktiviert und verwendet. Vorab wird geprüft, ob eine aktuell aktive, namensgleiche und damit konkurrierende Schrift automatisch deaktiviert werden muss. Sind dagegen die Schriften lo-kal nicht vorhanden, sorgt die Schriftkontrolle dafür, dass diese Schriften von einem Schriftserver heruntergeladen werden. Die heruntergeladenen Schriften werden zunächst in die lokale Schriftliste des Rechners eingetragen und anschließend aktiviert. Damit sind sie für die lokale Bearbeitung und/oder Ausdrucken des betreffenden Dokumentes verfügbar. Dieser Prozess wird gegebenenfalls mit allen Schriften wiederholt, deren Signaturen im Dokument eingebettet sind, bis der Rechner über sämtliche benötigten Schriften verfügt.

Anschließend kann das Dokument genauso wie erstmalig erstellt weiterbearbeitet und/oder ausgedruckt werden. Konkurrierende Schriften werden vorab deaktiviert, sodass hier eine Kollision mit bestehenden, nicht benötigten Schriften mit gleichem Namen ausgeschlossen ist.

Wesentliche Merkmale der Erfindung sind die ins Dokument eingebettete Signa-tur über die die Schrift eindeutig identifizierbar und mit dem Dateiinhalt verknüpft ist. Des Weiteren wird eine Routine für Schriften geschaffen, die es ermöglicht, Schriften gleichen Namens mit anderer Darstellung und Laufweite zu signieren und auf den Schriftserver zu speichern. Sofern ein Dokument geöffnet wird, kann die Routine selbsttätig überprü-fen, ob signierte Schriften im Dokument verwendet wurden. Falls diese Schriften lokal nicht zur Verfügung stehen, kann die Routine diese Schriften über den Schriftserver auf dem lokalen Rechner, auf dem die Bearbeitung und/oder der Ausdruck Dokumentes ausgeführt werden soll, installieren.

## Patentansprüche

1. Verfahren zur Erstellung, Bearbeitung und/oder Ausgabe von elektronischen Dokumenten, die auf einem Rechner erstellt und über diesen oder einen anderen Rechner zur elektronischen Bearbeitung und Ausgabe oder zum Ausdruck aufbereitet werden, wobei das Verfahren die Schritte umfasst:
Öffnen, Erstellen oder Einlesen des elektronischen Dokumentes, das Text ent-hält, der durch namentliche Angabe von Schriften formatiert ist,
Umwandeln des elektronischen Dokumentes in eine elektronische Ausgabedatei und Ausgeben der Ausgabedatei auf einem Bildschirm, auf einem Bürodrucker oder über einen Druckvor-gang in einem Printmedium,
wobei die verwendeten Schriften durch Angabe eines Schriftnamens im Dokument ge-speichert sind und spätestens beim Umwandeln des Dokumentes in eine Ausgabedatei über die Schriftnamen aus lokal abgespeicherten Schriften aus-gewählt und zur Umwandlung des den formatierten Text enthaltenden Dokumentes in die druckbare Ausgabedatei verwendet werden, **dadurch gekennzeichnet, dass** zur reproduzierbaren Wiedergabe und/oder Bearbeitung und/oder Ausgabe von Schriften in den Do-kumenten zu jeder Schrift eine eindeutige, elektronische Signatur erstellt und in das Dokument eingebettet wird, wobei die Schriften und die Signaturen in eine lo-kale Schriftliste und auf einem lokalen oder externen Schriftserver abgespeichert werden und bei Bearbeiten und/oder Umwandeln des elektronischen Dokumentes in eine Ausga-bedatei die Signaturen der verwendeten Schriften mit den Signaturen der unter den entsprechenden Schriftnamen verfügbaren Schriften auf dem Rechner verglichen werden, mit dem das Bearbeiten und/oder Aufbereiten durchgeführt wird und bei mangelnder Übereinstimmung der Signaturen oder bei Fehlen einer signierten Schrift selbsttätig die Schrift von einem lokalen oder externen Server geladen wird oder alternativ eine Routine zur Schriftenkontrolle oder eine Anzeige einer Fehlermeldung ausgelöst wird.

2. Verfahren zur Erstellung, Bearbeitung und Ausgabe von elektronischen Dokumenten nach An-spruch 1, **dadurch gekennzeichnet, dass** bei Erstellung des Dokumentes die verwen-deten Schriften dahingehend überprüft werden, ob die Schriften mit der identischen Signatur versehen verfügbar sind und dass, falls diese Prüfung positiv ist, die Schriften aktiviert werden oder, falls diese Prüfung nicht positiv ist, für diese neuen Schriften eine neue Signatur erstellt wird und zusammen mit den Schriftnamen in der Schriftliste und mitsamt der Schrift auf einen lokalen oder externen Schriftserver abgespeichert und im Dokument eingebettet werden.

3. Verfahren zur Erstellung, Bearbeitung und Ausgabe von elektronischen Dokumenten nach An-spruch 2, **dadurch gekennzeichnet, dass** die Routine zur Schriftenkontrolle das Aktivieren von Schriften umfasst, die die identische Signatur aufweisen wie die in dem Dokument verwendeten Schriften.

4. Verfahren zur Erstellung, Bearbeitung und Ausgabe von elektronischen Dokumenten nach An-spruch 3, **dadurch gekennzeichnet, dass** zumindest ein über ein Netzwerk verfügbarer Schriftserver bereitgehalten wird, auf dem neue Schriften in Verbindung mit der zugeordneten Signatur abgelegt werden, wo-bei über die Routine zur Schriftkontrolle bei lokalem Fehlen einer im Dokument verwendeten Schrift überprüft wird, ob die fehlende Schrift auf dem Schriftserver vorhanden ist und, falls dies der Fall ist, von dem Schriftserver heruntergeladen wird.

5. Verfahren zur Erstellung, Bearbeitung und Ausgabe von elektronischen Dokumenten nach An-spruch 4, **dadurch gekennzeichnet, dass** bei Verwendung einer Schrift, insbeson-dere einer neuen Schrift überprüft wird, ob diese Schrift mit eindeutiger Signatur auf dem Schriftserver vorhanden ist und dass, falls dies nicht der Fall ist, die neue Schrift mit der eindeutigen Signatur auf den Schriftserver hochgeladen wird.

6. Verfahren zur Erstellung, Bearbeitung und Ausgabe von elektronischen Dokumenten nach An-spruch 5, **dadurch gekennzeichnet, dass** die Zieladresse des Schriftservers, insbesonde-re in Form einer IP-Adresse, im Dokument oder auf dem Rechner abgespeichert ist.

7. Verfahren zur Erstellung, Bearbeitung und Ausgabe von elektronischen Dokumenten nach An-spruch 6, **dadurch gekennzeichnet, dass** der lokal im Dokument oder Rechner adres-sierte Schriftserver weitere Zieladressen weiterer Schriftserver enthält, wobei bei Fehlen einer signierten Schrift die Routine zur Schriftkontrolle diese Schrift auf den unter den weiteren Zieladressen mittelbar oder unmittelbar erreichbaren weiteren Schriftservern sucht.

8. Verfahren zur Erstellung, Bearbeitung und Ausgabe von elektronischen Dokumenten nach dem vorhergehenden Anspruch, **dadurch gekennzeichnet, dass** die Routine zur Schrift-kontrolle so oft durchlaufen wird, bis alle in einem Dokument verwendeten signierten Schriften auf dem bearbeitenden Rechner zur Verfügung stehen.

9. Verfahren zur Erstellung, Bearbeitung und Ausgabe von elektronischen Dokumenten nach einem der vorhergehenden Ansprüche, **dadurch gekennzeichnet, dass** vor dem Herunterla-den einer Schrift geprüft wird, ob auf dem Datenverarbeitungsgerät eine Schrift mit gleichem Schriftnamen, aber unterschiedlicher Signatur vorhanden ist. Sofern dies der Fall ist, wird die signierte Schrift heruntergeladen oder, sofern dies nicht der Fall ist, zunächst geprüft, ob die herunterzuladende Schrift frei verwend-bar ist und, sofern dies nicht der Fall ist, zunächst ein Bezahlvorgang eingeleitet werden kann, über den der Benutzer die Rechte an der zu installierenden Schrift erwirbt.

10. Verfahren zur Erstellung, Bearbeitung und Ausgabe von elektronischen Dokumenten nach einem der vorhergehenden Ansprüche, **dadurch gekennzeichnet, dass** die Schrift über eine Streuwertfunktion, insbesondere zur Erzeugung eines MD5-Hashs mit einem di-gitalen Abdruck mit einer Länge von 128bit oder eines übersetztgesicherten Hash-Codes (SHA) mit einem digitalen Abdruck mit einer Länge von 160bit oder ähnlich signiert wird.

11. Verfahren zur Erstellung, Bearbeitung und Ausgabe von elektronischen Dokumenten nach einem der vorhergehenden Ansprüche, **dadurch gekennzeichnet, dass** die Signatur eine di-gitale, deterministische Signatur ist.

12. Verfahren zur Erstellung, Bearbeitung und Ausgabe von elektronischen Dokumenten nach einem der vorhergehenden Ansprüche in einem Datenverarbeitungsnetzwerk, dadurch ge-kennzeichnet, dass unsignierte oder mit anderer Signatur versehene Schriften auf dem zu bearbeitenden Rechner deaktiviert werden und, sofern möglich, durch Schriften gleicher Signatur ersetzt werden.

13. Verfahren zur Erstellung, Bearbeitung und Ausgabe von elektronischen Dokumenten nach einem der vorhergehenden Ansprüche in einem Datenverarbeitungsnetzwerk, dadurch ge-kennzeichnet, dass in das elektronische Dokument eine Prüfroutine eingebettet wird, die überprüft, ob auf dem das Dokument bearbeitenden oder umwandelnden Rechner eine Software zur Durchführung eines Verfahrens nach einem der vorhergehenden Ansprüche installiert ist und, falls dies nicht der Fall ist, insbesondere über eine in der Prüfroutine hinter-legte Abrufadresse die Software zur Durchführung eines Verfahrens herunterlädt und auf dem Rechner installiert.

14. Softwaremodul zur Integration in eine Software, insbesondere in ein Layoutprogramm, ein Grafikprogramm oder eine Textverarbeitung, und zur Durchführung eines Verfah-rens nach einem der Ansprüche 1 bis 13, **dadurch gekennzeichnet, dass** das Soft-waremodul der Software bei Öffnen oder Erstellen eines elektronischen Dokumentes die folgenden lokalen Funktionalitäten hinzufügt: Überprüfen der in dem Dokument enthaltenen Schriften auf Hinterlegung in der Schriftliste, gegebenenfalls Aktivierung der in der Schriftliste gefundenen Schriften und Ak-tivierung einer Routine zur Schriftenkorrektur durch Herunterladen der benö-tigen Schriften und Installation und Eintragung der heruntergeladenen Schriften in die Schriftliste oder Aktivierung eines Benutzerdialogs, Deaktivierung konkurrierender Schriften und bedingtes Öffnen des Dokumentes erst nach Abarbeiten der vorange-gangenen Schritte.

15. Softwaremodul zur Integration in eine Software, insbesondere ein Layoutprogramm, ein Grafikprogramm oder eine Textverarbeitung, und zur Durchführung eines Verfah-rens nach einem der Ansprüche 1 bis 14, **dadurch gekennzeichnet, dass** das Soft-waremodul der Software bei Speichern eines lokal erstellten elektronischen Dokumentes die folgenden lokalen Funktionalitäten hinzufügt: Überprüfen der in dem Dokument verwendeten Schriften auf Hinterlegung in der Schriftliste; Gegebenenfalls Lesen der Signatur aus der lokalen Schriftliste bei positiver Prü-fung oder bei negativer Prüfung Eintragen in die Schriftliste; Heraufladen der benannten und signierten Schriften und der zugehörigen Signatur auf einen Schriftserver; Erstellen der Signatur und Einfügen der Signatur in das Dokument und Speichern des Dokumentes mit eingebetteter Signatur.
